# EUROPÄISCHE PATENTSCHRIFT

(11) **EP 1 599 304 B1**
(45) Veröffentlichungstag und Bekanntmachung des Hinweises auf die Patenterteilung: **16.05.2018**
(21) Anmeldenummer: 04715890.2
(22) Anmeldetag: 01.03.2004
(51) Int. Cl.: B23B 31/117, B23B 31/02, B23P 11/02

(54) **WERKZEUGSCHRUMPFAUFNAHME UND SYSTEM MIT EINER SOLCHEN WERZEUGSCHRUMPFAUFAHME UND EINEM ADAPTER**
SHRINK FIT TOOL HOLDER AND SYSTEM INCLUDING THE SAME AND AN ADAPTER
PORTE OUTIL À AJUSTEMENT FRETTÉ ET SYSTÈME AVEC UN TEL PORTE OUTIL ET UN ADAPTEUR

(30) Priorität: 01.03.2003 DE 10309015
(43) Veröffentlichungstag der Anmeldung: 30.11.2005
(73) Patentinhaber: Oesterle, Hermann, 72202 Nagold (DE)
(72) Erfinder: Oesterle, Hermann, 72202 Nagold (DE)
(74) Vertreter: Crazzolara, Helmut
(86) Internationale Anmeldenummer: PCT/EP2004/002011
(87) Internationale Veröffentlichungsnummer: WO 2004/078391

(56) Entgegenhaltungen:
- EP-A- 1 004 378
- WO-A-01/89758
- WO-A-02/18093
- DE-A- 10 225 839
- DE-A- 19 638 808
- DE-B- 1 008 085
- US-A- 3 397 615
- US-A- 6 035 512
- US-A1- 2001 024 020
- US-B1- 6 186 712
- US-B1- 6 371 705
- US-B1- 6 390 482
- PATENT ABSTRACTS OF JAPAN Bd. 2000, Nr. 25, 12. April 2001 (2001-04-12) -& JP 2001 219320 A (MITSUBISHI MATERIALS CORP), 14. August 2001 (2001-08-14)
- PATENT ABSTRACTS OF JAPAN Bd. 1999, Nr. 10, 31. August 1999 (1999-08-31) -& JP 11 129107 A (DAISHOWA SEIKI CO LTD), 18. Mai 1999 (1999-05-18)
- PATENT ABSTRACTS OF JAPAN Bd. 2000, Nr. 15, 6. April 2001 (2001-04-06) -& JP 2000 334622 A (MST CORPORATION:KK), 5. Dezember 2000 (2000-12-05)

## Beschreibung

Die Erfindung betrifft eine Werkzeugschrumpfaufnahme mit einem Aufnahmeabschnitt zum Einschrumpfen eines Werkzeugs und einem Einspannabschnitt zum Einspannen der Werkzeugschrumpfaufnahme in einem Werkzeugaufnahmeträger mit den Merkmalen im Oberbegriff von Anspruch 1. Die Erfindung betrifft auch System aus einer solchen Werkzeugschrumpfaufnahme und einem Adapter zum Aufsetzen dieser Werkzeugschrumpfaufnahme.

Bei herkömmlichen Werkzeugschrumpfaufnahmen ist der Aufnahmeabschnitt zum Einschrumpfen eines Werkzeugs an einem Ende der Werkzeugschrumpfaufnahme angeordnet. Der Einspannabschnitt zum Einspannen der Werkzeugschrumpfaufnahme in einem Werkzeugaufnahmeträger ist in Längsrichtung von dem Aufnahmeabschnitt für das Werkzeug beabstandet an dem entgegengesetzten Ende der Werkzeugaufnahme angeordnet. Beim Einsatz der eingeschrumpften Werkzeuge auf einer Werkzeugmaschine, zum Beispiel einer Fräs-, Dreh- oder Bohrmaschine, hat die Oberfläche des insbesondere spanend bearbeiteten Werkstücks oft nicht die gewünschte Qualität.

Die DE 196 38 808 A1 und die DE 1 008 085 beschreiben jeweils eine Werkzeugschrumpfaufnahme gemäß dem Oberbegriff des Anspruchs 1 mit einem Aufnahmeabschnitt zum Einschrumpfen eines Werkzeugs und einem Einspannabschnitt zum Einspannen der Werkzeugschrumpfaufnahme in einem Werkzeugaufnahmeträger, wobei sich der Aufnahmeabschnitt für das Werkzeug und der Einspannabschnitt der Werkzeugschrumpfaufnahme in Längsrichtung überlappen, wobei die Werkzeugschrumpfaufnahme an ihrem dem Einspannabschnitt zugewandten Ende eine einen weiteren Abschnitt bildende und sich in Längsrichtung der Werkzeugschrumpfaufnahme erstreckende Öffnung aufweist, deren Durchmesser größer ist als der Durchmesser des Aufnahmeabschnitts.

Weitere Werkzeugschrumpfaufnahmen gehen aus der JP 2001-219320, der US 6 186 712 B1 und der US 6 371 705 B1 hervor.

Aufgabe der Erfindung ist es, eine Werkzeugschrumpfaufnahme der eingangs geschilderten Art bereitzustellen, durch welche die Nachteile des Standes der Technik überwindbar sind, insbesondere durch welche bessere Oberflächenqualitäten der bearbeiteten Werkstücke erzielbar sind.

Die Aufgabe ist bei einer Werkzeugschrumpfaufnahme mit dem Merkmalen des unabhängigen Anspruchs 1 gelöst. Bei einer solchen Werkzeugschrumpfaufnahme weist der weitere Abschnitt Schlitze mit einer axialen Erstreckung auf. Es ist ferner vorgesehen, dass sich der Aufnahmeabschnitt für das Werkzeug und der Einspannbereich der Werkzeugschrumpfaufnahme in Längsrichtung überlappen. Durch die Überlagerung des Aufnahmeabschnitts für das Werkzeug mit dem Einspannbereich in axialer Richtung können kurze, kompakte Werkzeugschrumpfaufnahmen geschaffen werden, die insbesondere, in radialer Richtung eine sehr hohe Steifigkeit aufweisen. Das wiederum führt zu einer besseren Oberflächengüte der bearbeiteten Werkstücke. Außerdem kann durch die kurze Baulänge der Werkzeugschrumpfaufnahme die Standzeit der Werkzeuge erhöht werden.

Ein bevorzugtes Ausführungsbeispiel der Werkzeugschrumpfaufnahme ist dadurch gekennzeichnet, dass die Überlappung mehr als 50 % der Gesamtlänge der Werkzeugschrumpfaufnahme beträgt; für viele Anwendungsfälle ist es ausreichend, wenn die Überlappung mehr als 30 % beträgt. Dadurch wird im Betrieb eine Auslenkung der Werkzeugschrumpfaufnahme in radialer Richtung vermieden.

Ein weiteres bevorzugtes Ausführungsbeispiel der Werkzeugschrumpfaufnahme ist dadurch gekennzeichnet, dass der Aufnahmeabschnitt zum Einschrumpfen des Werkzeugs von einem Durchgangsloch gebildet wird, das sich über die gesamte Länge der Werkzeugschrumpfaufnahme erstreckt. Das Durchgangsloch hat vorzugsweise einen kreisförmigen Querschnitt, kann aber auch einen polygonförmigen Querschnitt aufweisen.

Ein weiteres bevorzugtes Ausführungsbeispiel der Werkzeugschrumpfaufnahme ist dadurch gekennzeichnet, dass das Durchgangsloch an seinem dem Einspannabschnitt entgegengesetzten Ende einen Zentrierabschnitt mit einem erweiterten Innendurchmesser aufweist. Der Zentrierabschnitt dient dazu, vor dem Einschrumpfen ein Ende des einzuschrumpfenden Werkzeugs aufzunehmen und zu zentrieren.

Ein weiteres bevorzugtes Ausführungsbeispiel der Werkzeugschrumpfaufnahme ist dadurch gekennzeichnet, dass im Anschluss an den Einspannabschnitt eine Umfangsnut ausgebildet ist, die einen insbesondere rechteckförmigen Querschnitt aufweist. Die Umfangsnut wirkt mit einem Exzenter zusammen, der an einer Spannmutter ausgebildet ist und zum Lösen der Werkzeugaufnahme nach der Bearbeitung dient.

Ein weiteres bevorzugtes Ausführungsbeispiel der Werkzeugschrumpfaufnahme ist dadurch gekennzeichnet, dass an dem dem Einspannabschnitt entgegengesetzten Ende der Werkzeugschrumpfaufnahme im Anschluss an die Umfangsnut ein kegelförmiger Abschnitt ausgebildet ist, der sich zur Umfangsnut hin erweitert. Der kegelförmige Abschnitt erleichtert das Aufsetzen einer Spannmutter.

Ein weiteres bevorzugtes Ausführungsbeispiel der Werkzeugschrumpfaufnahme ist dadurch gekennzeichnet, dass der Einspannabschnitt die Gestalt eines Kegels aufweist. Die Abmessungen des Kegels sind vorzugsweise genormt, zum Beispiel nach der DIN 6499.

Ein weiteres bevorzugtes Ausführungsbeispiel der Werkzeugschrumpfaufnahme ist dadurch gekennzeichnet, dass der Einspannabschnitt die Gestalt eines Kreiszylinders aufweist. Die Gestalt des Einspannabschnitts ist an die Gestalt des Werkzeugaufnahmeträgers, angepasst. Ein bevorzugtes System weist eine Werkzeugschrumpfaufnahme gemäß der Erfindung und einen Adapter auf. Der Adapter kann eine Senkung aufweisen, deren Abmessungen an das Ende des Einspannabschnitts der Werkzeugschrumpfaufnahme angepasst sind. Die Senke kann als Kegel- oder Zylindersenkung ausgebildet sein und gewährleistet, dass fast die gesamte äußere Umfangsfläche der Werkzeugschrumpfaufnahme von außen zugänglich ist, um Wärme in die Werkzeugschrumpfaufnahme einzubringen. Die Höhe der Senkung ist dabei so gewählt, dass ein Kippen der aufgesetzten Werkzeugaufnahme sicher verhindert wird. Bei induktiver Erwärmung und elektrisch leitfähigem, insbesondere metallischem Adapter ist die Höhe der Senkung verhältnismäßig gering, beispielsweise 1 bis 5, insbesondere etwa 2 mm.

Ein bevorzugtes Ausführungsbeispiel des Systems ist dadurch gekennzeichnet, dass sich der Adapter zu der Werkzeugschrumpfaufnahme hin verjüngt. Durch die Verjüngung wird das Aufsetzen eines Heizelements auf den Adapter vereinfacht.

Ein weiteres bevorzugtes Ausführungsbeispiel des Systems ist dadurch gekennzeichnet, dass der Adapter mindestens zweiteilig ausgebildet ist und einen Grundadapter und einen Adaptereinsatz umfasst, an dem die Senkung und/oder die Verjüngung ausgebildet sind/ist. Das ermöglicht die Verwendung des Grundadapters für verschieden große Werkzeugschrumpfaufnahmen. Die verschiedenen Werkzeugschrumpfaufnahmen können zusammen mit den zugehörigen Adaptereinsätzen mit ein und demselben Grundadapter verwendet werden. Der Grundadapter wiederum ist an das zu verwendende Heizgerät angepasst.

Ein weiteres, bevorzugtes Ausführungsbeispiel des Systems ist durch eine zentrale Gewindebohrung des Adapaters gekennzeichnet, in der ein Gewindebolzen verdrehbar aufgenommen ist, dessen freies Ende einen Anschlag für das Werkzeug bildet, wenn die Werkzeugschrumpfaufnahme auf den Adapter aufgesetzt ist. Durch Verdrehen des Gewindebolzens kann die Einschrumpftiefe des Werkzeugs stufenlos verstellt werden.

Weitere Vorteile, Merkmale und Einzelheiten der Erfindung ergeben sich aus der nachfolgenden Beschreibung, in der unter Bezugnahme auf die Zeichnung zwei Ausführungsbeispiele beschrieben sind. Es zeigen:
- Fig. 1: eine nicht erfindungsgemäße Werkzeugschrumpfaufnahme im Längsschnitt;
- Fig. 2: die Werkzeugschrumpfaufnahme aus Figur 1 vor dem Einschrumpfen eines Werkzeugs;
- Fig. 3: die Werkzeugschrumpfaufnahme aus Figur 1 beim Zentrieren des Werkzeugs;
- Fig. 4: die Werkzeugschrumpfaufnahme aus Figur 1 mit eingeschrumpftem Werkzeug;
- Fig. 5: einen Adaptereinsatz zum Aufsetzen der in Figur 1 dargestellten Werkzeugschrumpfaufnahme im Längsschnitt;
- Fig. 6: einen Grundadapter zur Verwendung mit dem in Figur 5 dargestellten Adaptereinsatz im Längsschnitt;
- Fig. 7: die vergrößerte Darstellung einer Einzelheit VII aus Figur 6;
- Fig. 8: den Grundadapter aus Figur 6 mit aufgesetztem Adaptereinsatz;
- Fig. 9: den Adapter aus Figur 8 mit aufgesetzter Werkzeugschrumpfaufnahme;
- Fig. 10: zeigt ein erstes Ausführungsbeispiel einer erfindungsgemäßen Werkzeugschrumpfaufnahme im Längsschnitt;
- Fig. 11: zeigt das erste Ausführungsbeispiel der Fig. 10 in perspektivischer Ansicht;
- Fig. 12: zeigt ein zweites Ausführungsbeispiel einer erfindungsgemäßen Werkzeugschrumpfaufnahme im Längsschnitt;
- Fig. 13: zeigt das zweites Ausführungsbeispiel der Fig. 12 in perspektivischer Ansicht; und
- Fig. 14: zeigt einen zweiten Adapater mit eingesetzter Werkzeugschrumpfaufnahme im Längsschnitt.

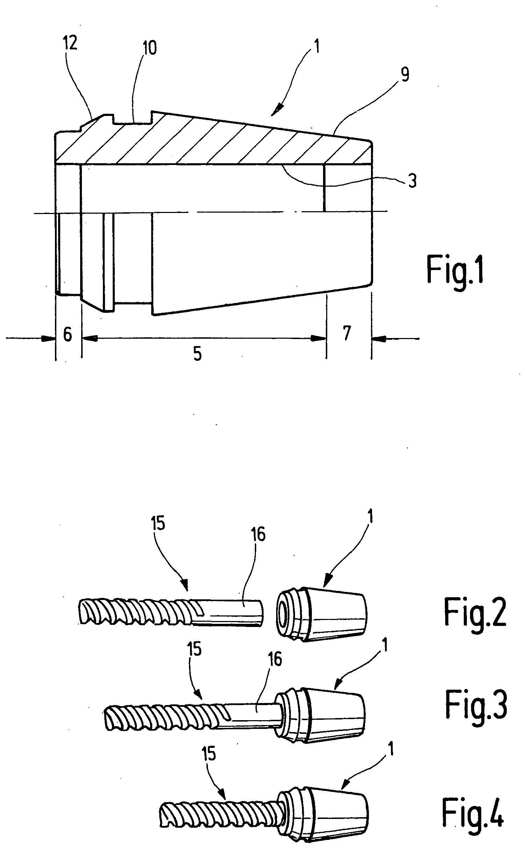

In Figur 1 ist eine Werkzeugschrumpfaufnahme 1 dargestellt, die nicht unter die Ansprüche fällt und somit keinen Teil der Erfindung betrifft. Diese Werkzeugschrumpfaufnahme weist eine Durchgangsbohrung 3 zur Aufnahme eines Werkzeugschafts 16 eines Werkzeugs 15 (siehe Figuren 2 bis 4) auf. Die Durchgangsbohrung 3 weist einen Abschnitt 5 mit einem konstanten Innendurchmesser auf. An einem Ende geht der Abschnitt 5 in einen Zentrierabschnitt 6 mit einem geringfügig erweiterten Innendurchmesser über. An dem anderen Ende geht der Abschnitt 5 in einen Abschnitt 7 mit einem ebenfalls geringfügig erweiterten Innendurchmesser über.

Die Werkzeugschrumpfaufnahme 1 ist rotationssymmetrisch ausgebildet und weist an ihrem äußeren Umfang einen kegelförmigen Einspannabschnitt 9 auf, der sich zum Ende hin verjüngt. An das sich erweiternde Ende des Einspannabschnitts 9 schließt sich eine Umfangsnut 10 an, die zur Aufnahme eines Exzenters einer (nicht dargestellten) Spannschraube dient. Auf die Umfangsnut 10 folgt in axialer Richtung ein kegelförmiger Abschnitt 12, der sich von der Umfangsnut 10 weg verjüngt. Der kegelförmige Abschnitt 12 dient dazu, ein einfaches Aufsetzen beziehungsweise Überschieben der Spannmutter mit dem Exzenter zu gewährleisten. Zu diesem Zweck ist der größte Außendurchmesser des kegelförmigen Abschnitts 12 größer als der zugehörige Innendurchmesser der Spannmutter mit dem Exzenter.

In Figur 2 ist das Werkzeug 15, zum Beispiel ein Bohrer, kurz vor dem Einschrumpfen in die Werkzeugschrumpfaufnahme dargestellt. In Figur 3 ist das freie Ende des Werkzeugschafts 16 zu dessen Zentrierung in den Zentrierabschnitt 6 der Werkzeugschrumpfaufnahme 1 eingeführt. In Figur 4 ist der Werkzeugschaft 16 des Werkzeugs 15 in die Durchgangsbohrung 3 eingeschrumpft.

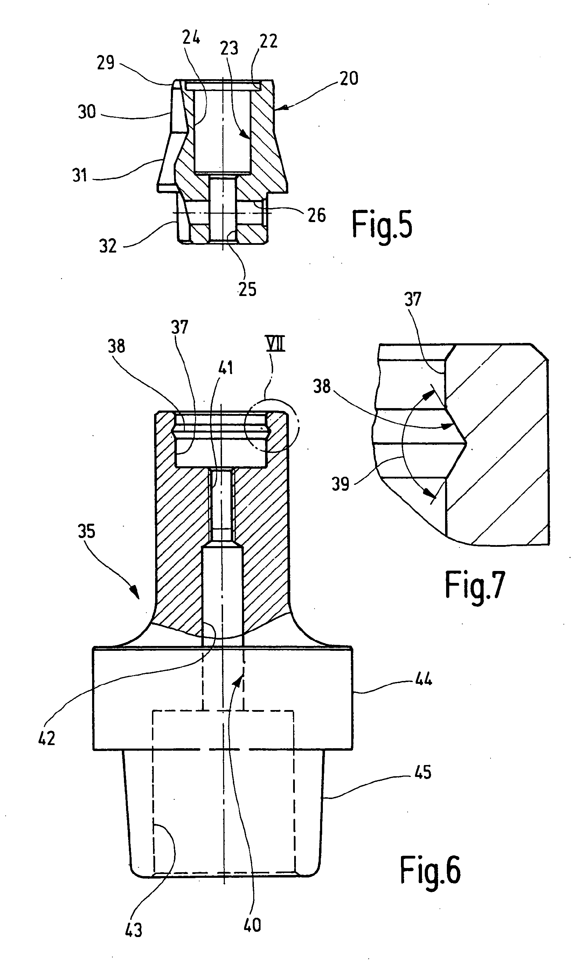

In Figur 5 ist ein Adaptereinsatz 20 im Längsschnitt dargestellt. Der Adaptereinsatz 20 ist rotationssymmetrisch ausgebildet und umfasst eine Senkung 22, die zur Aufnahme des freien Endes des Einspannabschnitts der in Figur 1 dargestellten Werkzeugschrumpfaufnahme dient. Die Senkung 22 kann als Zylindersenkung ausgebildet sein. In Figur 5 ist die Senkung 22 leicht konisch ausgebildet, um das Aufsetzen der Werkzeugschrumpfaufnahme zu erleichtern.

Der Adaptereinsatz 20 ist mit einer durchgehenden Bohrung 23 ausgestattet. Die Bohrung 23 umfasst einen Bohrungsabschnitt 24 und einen Bohrungsabschnitt 25, wobei der Bohrungsabschnitt 24 einen größeren Innendurchmesser aufweist als der Bohrungsabschnitt 25, in dem Bohrungsabschnitt 25 wird die Bohrung 23 von einer Durchgangsbohrung 26 durchdrungen, die senkrecht zu der Durchgangsbohrung 23 verläuft. Die Bohrung 26 dient zur Aufnahme einer vorgespannten Kugel, die wiederum zum Fixieren des Adaptereinsatzes 20 in einem Grundadapter (siehe Figur 6) dient. Die Durchgangsbohrung 23 verläuft zentral durch den Adaptereinsatz 20 und bildet gleichzeitig die Längsachse des rotationssymmetrischen Bauteils.

An seinem äußeren Umfang umfasst der Adaptereinsatz 20 vier Abschnitte 29, 30, 31 und 32. Der Abschnitt 29 ist im Bereich der Senkung 22 angeordnet und leicht konisch ausgebildet, wobei sich der Abschnitt 29 zu seinem freien Ende hin verjüngt. Der Abschnitt 30 folgt auf den konischen Abschnitt 29 und weist einen konstanten Außendurchmesser auf. Der Abschnitt 31 schließt sich an den Abschnitt 30 an und erweitert sich von dem Abschnitt 30 kegelförmig. Der Abschnitt 32 folgt auf den Abschnitt 31 und weist einen etwas kleineren Außendurchmesser als der Abschnitt 30 auf.

In Figur 6 ist ein Grundadapter 35 im Längsschnitt dargestellt, der ebenfalls rotationssymmetrisch ausgebildet ist. Der Grundadapter 35 ist mit einer zentralen Aufnahmebohrung 37 ausgestattet, deren Innendurchmesser an den Außendurchmesser des Abschnitts 32 des Adaptereinsatzes 20 angepasst ist. Dadurch wird ein Einsetzen des Adaptereinsatzes 20 mit dem Abschnitt 32 in die Aufnahmebohrung 37 des Grundadapters 35 ermöglicht. In der Aufnahmebohrung 37 ist eine umlaufende Nut mit einem dreieckförmigen Querschnitt ausgebildet. In der vergrößerten Ausschnittsdarstellung der Figur 7 sieht man, dass die Nutflanken der dreieckförmigen Nut 38 in einem Winkel 39 zueinander angeordnet sind.

Wie man in Figur 6 sieht, ist die Aufnahmebohrung 37 Teil einer zentralen Durchgangsbohrung 40, die die Längsachse oder Rotationsachse des Grundadapters 35 bildet. Die Durchgangsbohrung 40 umfasst ausgehend von der Aufnahmebohrung 37 drei weitere Abschnitte 41, 42 und 43 mit unterschiedlichen Innendurchmessern. Der Bohrungsabschnitt 41 weist den kleinsten und der Bohrungsabschnitt 43 den größten Innendurchmesser auf Darüber hinaus ist in dem Bohrungsabschnitt 41 ein Innengewinde ausgebildet. Außen weist der Grundadapter 35 einen Abschnitt 44 mit erweitertem Außendurchmesser auf.

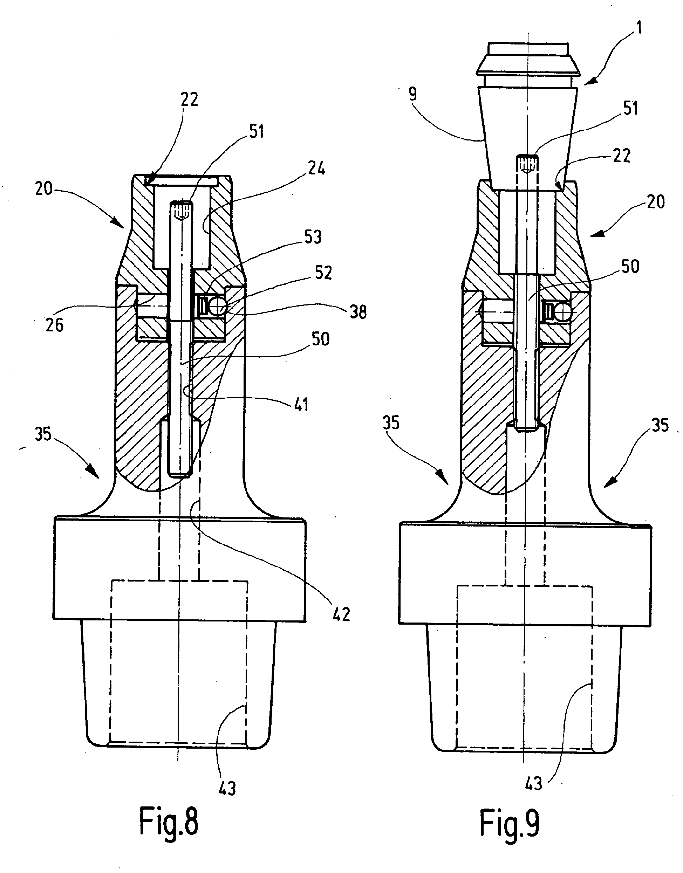

In Figur 8 ist der Grundadapter 35 aus Figur 6 mit aufgesetztem Adaptereinsatz 20 aus Figur 5 dargestellt. Wie man sieht, ist der Abschnitt 32 des Adaptereinsatzes 20 in der Aufnahmebohrung 37 des Grundadapters 35 aufgenommen. In den Abschnitt 41 mit Innengewinde des Grundadapters 35 ist ein Gewindebolzen 50 eingeschraubt, von dem ein freies Ende in den Abschnitt 42 der Durchgangsbohrung 40 und von dem das andere freie Ende 51 in den Bohrungsabschnitt 24 des Adaptereinsatzes 20 ragt. Außerdem ist in der Durchgangsbohrung 26 des Adaptereinsatzes 20 eine Kugel 22 mit Hilfe einer Feder 53 vorgespannt. Die Kugel 52 wird durch die Feder 53 zum Teil aus der Durchgangsbohrung 26 herausgedrückt. Der aus der Durchgangsbohrung 26 herausragende Teil der Kugel 52 ist im aufgesetzten Zustand des Adaptereinsatzes 20 in der Nut 38 des Grundadapters 35 aufgenommen. Dadurch wird ein unerwünschtes Lösen des Adaptereinsatzes 20 von dem Grundadapter 35 vermieden.

In Figur 9 sieht man, wie die in Figur 1 dargestellte Werkzeugschrumpfaufnahme 1 mit dem freien Ende des Einspannabschnitts 9 auf die Senkung 22 des Adaptereinsatzes 20 aufgesetzt ist. Der Abschnitt 43 der Durchgangsbohrung 40 dient dazu, den Grundadapter 35 mit einem (nicht dargestellten) Heizgerät zu verbinden.

Durch die Erwärmung der Werkzeugschrumpfaufnahme und die daraus resultierende Aufweitung der Durchgangsbohrung 3 kann der Werkzeugschaft 16 eines Werkzeugs 15 reversibel fest mit der Werkzeugschrumpfaufnahme 1 verbunden werden. Die Durchgangsbohrung 3 der Werkzeugschrumpfaufnahme 1 wird gegenüber dem zylindrischen Werkzeugschaft 16 um mindestens circa 0,01 mm, insbesondere um mindestens circa 0,02 mm, kleiner ausgeführt als der Spanndurchmesser des Schneidwerkzeugs 15. Die Überdeckung des Innendurchmessers der Durchgangsbohrung 3 und des Außendurchmessers des Werkzeugschafts 16 wird unter anderem vom verwendeten Werkstoff beeinflusst. Infolge der temperaturproportionalen Volumenveränderung fester Stoffe bei Erwärmung wird der Innendurchmesser der Durchgangsbohrung 3 der Werkzeugschrumpfaufnahme 1 vergrößert. Die Aufweitung durch Erwärmung wird im elastischen Bereich des Werkstoffs durchgeführt. Somit ist der Spannvorgang beliebig oft wiederholbar, also reversibel.

Die Erwärmung beim Einschrumpfen des Werkzeugschafts in die Durchgangsbohrung der Werkzeugschrumpfaufnahme liegt im Temperaturbereich von + 100 bis + 380 °C, insbesondere + 250 bis + 330 °C. Im erwärmten Zustand der Werkzeugschrumpfaufnahme 1 kann der, gegebenenfalls heruntergekühlte, Werkzeugschaft 16 in die Durchgangsbohrung 3 eingeführt werden. Bei der anschließenden Abkühlung der Werkzeugschrumpfaufnahme 1 mit dem eingesetzten Werkzeugschaft 16 auf Temperaturen im Bereich von -20 bis + 110 °C versucht die Werkzeugschrumpfaufnahme 1 wieder ihren Urzustand zu erreichen. Dabei wird auf den zylindrischen Werkzeugschaft 16 durch das Erkalten der Werkzeugschrumpfaufnahme 1 in radialer Richtung ein Spanndruck erzeugt. Die Höhe des Spanndrucks wird primär von der Überdeckung des Außendurchmessers des Werkzeugschafts 16 mit dem Innendurchmesser der Durchgangsbohrung 3 der Werkzeugschrumpfaufnahme 1 bestimmt. Eine geringe Überdeckung führt zu einem geringen Spanndruck. Eine große Überdeckung führt zu einem hohen Spanndruck. Der Spannvorgang ist reversibel und beliebig oft wiederholbar, solange sich die Verformung im elastischen Bereich des verwendeten Werkstoffes bewegt.

Bei einen herkömmlichen Verfahren liegt der Schrumpfbereich außerhalb des Spanneinsatzes. Das hat den Nachteil, dass für jeden Schneidwerkzeugspannschaftdurchmesser eine entsprechend aufwendige und teure Werkzeugaufnahme benötigt wird. Die lange Bauform hat darüber hinaus den Nachteil, dass die radiale Belastung der Bearbeitungsspindel erheblich ansteigt, was dann zu einem Steifigkeitsverlust und einer radialen Auslenkung der Bearbeitungsspindel führt.

Das Schrumpf-Spannsystem benötigt keine teuren Sonderwerkzeugaufnahmen, sondern kann in gewöhnliche Universal-Spannzangenaufnahmefutter oder Bearbeitungsspindeln mit Spannzangenaufnahmen eingebaut werden. Durch die Überlagerung des Schrumpfbereichs mit dem Spannbereich lassen sich kürzeste Schneidwerkzeugspannungen realisieren. Ein wesentlicher Vorteil ist in der maximalen Radialsteifigkeit der Bearbeitungswerkzeuge zu sehen. Das wiederum führt zu höchsten Oberflächengüten der bearbeiteten Werkstücke.

Der Schrumpf-Spannvorgang findet direkt im Spannkegel statt. Dadurch ist eine extrem kurze Spannung der Schneidwerkzeuge möglich. Die Spanneinsatzbohrung, die auch als Durchgangsbohrung 3 bezeichnet wird, wird von dem Spannkegel, der auch als Einspannabschnitt 9 bezeichnet wird, überlagert. Der Schrumpf-Spanneinsatz, der auch als Werkzeugschrumpfaufnahme 1 bezeichnet wird, ist sehr kostengünstig herzustellen und lässt sich in jede handelsübliche Norm-Spannzangenaufnahme einsetzen. Die Werkzeugschrumpfaufnahme 1 ermöglicht gegenüber einigen der herkömmlichen Spanntechniken eine um zwei- bis vierfach höhere Drehmomentübertragung bei gleichzeitig höherer Radialsteifigkeit.

Das Schrumpf-Spannsystem ermöglicht kurze Ein- und Ausschrumpfzeiten. Durch eine induktive Erwärmung der Werkzeugschrumpfaufnahme mit hoher Energiedichte lässt sich ein Werkzeugwechsel im Sekundenbereich durchführen. Dadurch lassen sich Rundlaufgenauigkeiten der Schneidwerkzeuge von weniger als 3 *µ*m realisieren, und zwar bei maximaler Spannkraft und Radialsteifigkeit.

Das Einschrumpfen eines Werkzeugschafts in eine Schrumpfaufnahme mit Hilfe eines Adapters wird im Folgenden beschrieben. Zunächst muss der Grundadapter 35 mit einem passenden Adaptereinsatz 20, der von der Gestalt und den Abmessungen der Werkzeugschrumpfaufnahme 1 abhängig ist, zusammengesteckt werden. Dann wird der so vormontierte Adapter in eine Grundaufnahme eines (nicht dargestellten) Schrumpfgerätes eingesetzt. Dann wird die Werkzeugschrumpfaufnahme 1 auf den Adaptereinsatz 20 aufgesteckt. Anschließend wird eine (nicht dargestellte) Induktionsspule über der Werkzeugschrumpfaufnahme 1 zentriert und fixiert. Daraufhin wird der Werkzeugschaft 16 in den Zentrierabschnitt 6 der Durchgangsbohrung 3 eingeführt. Dann wird das Schrumpfgerät aktiviert.

Durch die temperaturproportionale Volumenveränderung wird die Durchgangsbohrung 3 der Werkzeugschrumpfaufnahme 1 vergrößert. Sobald die Aufweitung der Durchgangsbohrung 3 der Werkzeugschrumpfaufnahme 1 größer als der Außendurchmesser des Werkzeugschafts 16 ist, fällt das Werkzeug 15 durch sein Eigengewicht in die Durchgangsbohrung 3. Das freie Ende 51 der Gewindespindel 50 bildet dabei einen Anschlag für das freie Ende des Werkzeugschafts 16. Dann kann die Wärmequelle ausgeschaltet werden. Durch die nun folgende Abkühlung versucht die Werkzeugschrumpfaufnahme 1 ihre ursprüngliche Gestalt zu erreichen, was jedoch durch den Werkzeugschaft 16 verhindert wird. Die dadurch entstehende Spannung sorgt dafür, dass der Werkzeugschaft 16 form- und kraftschlüssig in der Werkzeugschrumpfaufnahme 1 festgehalten wird.

Um den Abkühlvorgang zu beschleunigen, kann die Werkzeugschrumpfaufnahme 1 mit dem darin befindlichen Werkzeugschaft 16 in einer (nicht dargestellten) Kühlstation abgekühlt werden.

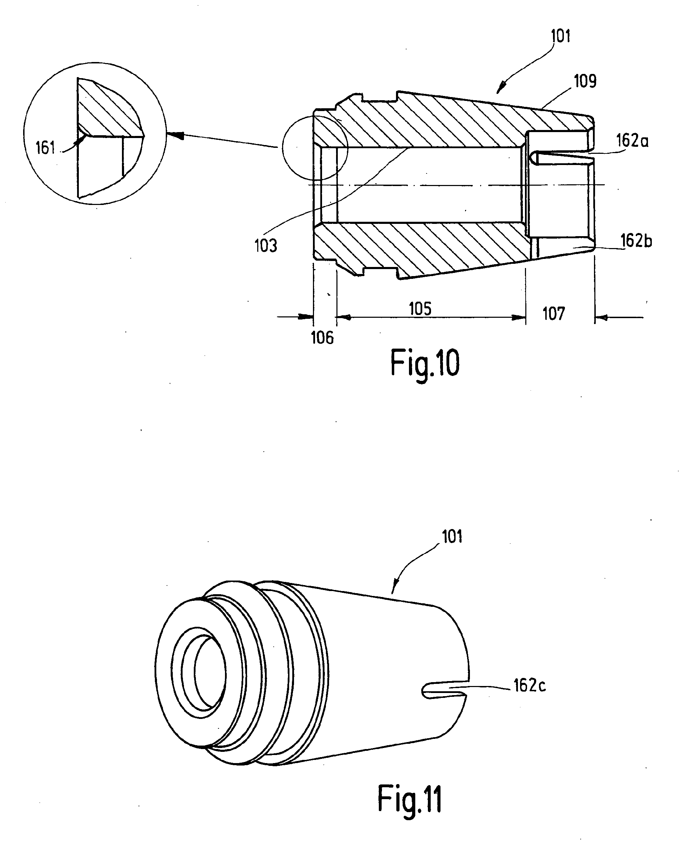

Die Fig. 10 zeigt ein ersten Ausführungsbeispiel einer erfindungsgemäßen Werkzeugschrumpfaufnahme 101 im Längsschnitt und die Fig. 11 zeigt eine zugehörige perspektivische Ansicht. Der Aufnahmeabschnitt 103 ist von einer sich in Längsrichtung der Werkzeugschrumpfaufnahme erstreckenden Öffnung gebildet ist, im dargestellten Ausführungsbeispiel von einem sich über die ganze Länge erstreckenden Durchgangsloch. Das in der Darstellung der Fig. 10 linke Ende der Öffnung, welches das Werkzeug aufnimmt, ist radial aufgeweitet, insbesondere ist an diesem Ende ein Radius 161 angeformt, wie insbesondere die Vergrößerung des entsprechenden Ausschnittes der Fig. 10 zeigt. Der Radius 161 beträgt in der Regel weniger als die Hälfte des Durchmessers Aufnahmeabschnitts 103, insbesondere weniger als 20 % hiervon, und vorzugsweise im Bereich eines oder weniger mm. Dadurch kann das Werkzeug einfach, präzise und ohne Verkanten in die Werkzeugschrumpfaufnahme 101 eingeführt werden.

An ihrem dem Einspannabschnitt 109 zugewandten Ende weist die Werkzeugschrumpfaufnahme 101 eine den weiteren Abschnitt 107 bildende und sich in Längsrichtung der Werkzeugschrumpfaufnahme erstreckende Öffnung auf, deren Durchmesser größer ist als der Durchmesser des Aufnahmeabschnitts 103. Die Öffnung kann wie im dargestellten Ausführungsbeispiel ein Abschnitt eines Durchgangslochs sein, könnte aber auch als Sackloch ausgebildet sein. Die Öffnung ist vorzugsweise in Längsrichtung zylindrisch, insbesondere kreiszylindrisch.

Durch den größeren Durchmesser ist die Wandstärke des Einspannabschnitts 109 in diesem weiteren Abschnitt 107 herabgesetzt, beispielsweise bis auf wenige oder bis auf nur 1 mm an dem freien Ende. Dadurch ist bereits eine vorteilhafte kraftspeichernde und damit federnde Verformung des Einspannabschnitts 109 gewährleistet. Diese wird noch verbessert, wenn ein oder mehrere Schlitze 162a, 162b, 162c in den weiteren Abschnitt 107 eingebracht sind, die mindestens abschnittsweise eine Erstreckung in axialer Richtung aufweisen, im dargestellten Ausführungsbeispiel drei in Umfangsrichtung gleichverteilte Schlitze 162a, 162b, 162c in axialer Richtung; die Schlitze 162a, 162b, 162c können auch schräg zur Axialrichtung verlaufen. Mit Ausnahme der Schlitze 162a, 162b, 162c ist die Werkzeugschrumpfaufnahme 101 rotationssymmetrisch zu ihrer Längsachse.

Die im weiteren Abschnitt 107 vorgesehene Wandstärke ist insbesondere abhängig von den Werkstoffen, den Werkzeugabmessungen und dem zu bearbeitenden Werkstück. Durch die reduzierte Wandstärke können auch kleine Differenzen der Kegelwinkel durch elastische Verformung der Werkzeugschrumpfaufnahme 101 ausgeglichen werden und es wird eine höhere Rundlaufgenauigkeit des Gesamtsystems erzielt.

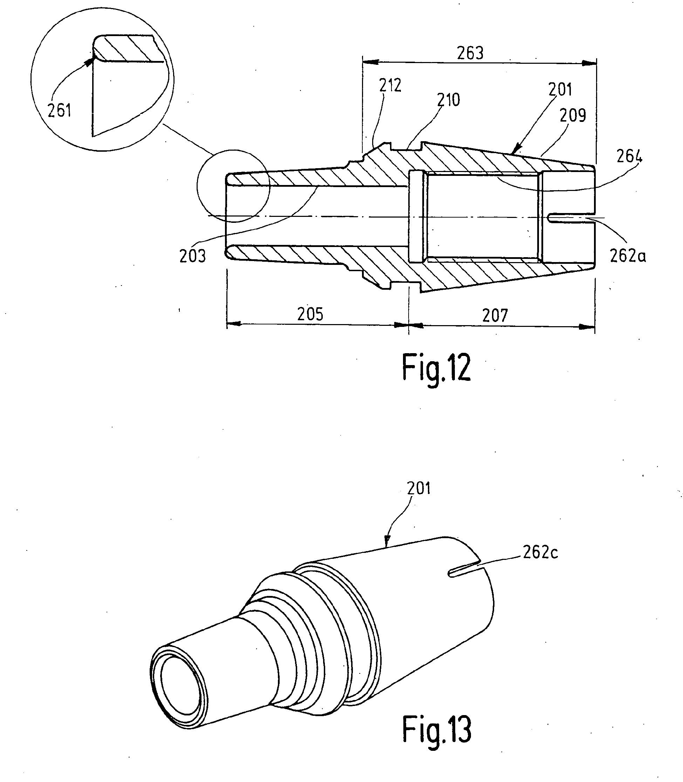

Die Fig. 12 zeigt ein zweites Ausführungsbeispiel einer erfindungsgemäßen Werkzeugschrumpfaufnahme 201 im Längsschnitt und die Fig. 13 zeigt eine zugehörige perspektivische Ansicht. Im zweiten Ausführungsbeispiel ist der Aufnahmeabschnitt 205 aus der Mitte zu dem das Werkzeug aufnehmenden Ende hin versetzt und nur noch zum geringeren Teil von dem Einspannbereich 263 überdeckt, welcher den Einspannabschnitt 209, die Nut 210 und den kegelförmigen Abschnitt 212 umfasst. An dem das Werkzeug aufnehmenden Ende kann der Aufnahmeabschnitt 205 noch einen Zentrierabschnitt wie im ersten Ausführungsbeispiel aufweisen. Außerdem weist dieses Ende einen Radius 261 auf von beispielsweise 0,1 bis 5 mm, insbesondere 0,2 bis 3 mm, und vorzugsweise 0,4 bis 2 mm, zum vereinfachten Einführen des Werkzeugs. Die Überdeckung des Aufnahmeabschnitts 205 mit dem Einspannbereich 263 beträgt beispielsweise bis zum Zweifachen des Spanndurchmessers.

An ihrem dem Einspannabschnitt 209 zugewandten Ende weist die Werkzeugschrumpfaufnahme 201 eine den weiteren Abschnitt 207 bildende Öffnung auf, die Teil des Durchgangslochs ist. Vom Ende her sind axial Schlitze 262a, 262c eingebracht entsprechend dem zweiten Ausführungsbeispiel. Ein vorzugsweise vom Ende zurückversetzter Abschnitt der Öffnung weist ein Innengewinde 264 auf, in das ein Anschlag für das einzuführende Werkzeug präzise positioniert werden kann. Die axiale Erstreckung des weiteren Abschnitts 207 beträgt beispielsweise den doppelten Betrag des Durchmessers des weiteren Abschnitts 207. Ein Übergangsabschnitt zwischen Innengewinde 264 und Aufnahmeabschnitt 203 ist vorzugsweise gewindefrei.

Insbesondere bei ungünstigen Platzverhältnissen im Arbeitsraum zwischen Werkstückeinspannung und Bearbeitungswerkzeug bietet dieses Ausführungsbeispiel vor allem bei kleinen Fräswerkzeugen Vorteile, auch weil der elastisch verformbare Bereich des Einspannbereichs 263 größer ist.

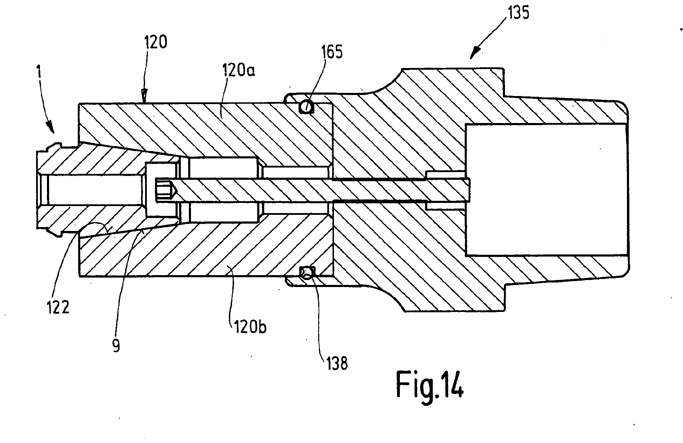

Die Fig. 14 zeigt einen Adapter mit eingesetzter Werkzeugschrumpfaufnahme im Längsschnitt. Der Adapter weist einen Grundkörper 135 und einen Adaptereinsatz 120 auf. Der Adaptereinsatz 120 ist aus zwei Teilen 120a, 120b zusammensetzbar, wobei die Trennebene rechtwinklig zur Zeichenebene der Fig. 14 verläuft und parallel zur Längsachse der Anordnung; vorzugsweise handelt es sich dabei um Gleichteile 120a, 120b. Der Adaptereinsatz 120 besteht aus einem elektrisch isolierenden Werkstoff, vorzugsweise aus einer faserverstärkten Keramik, insbesondere aus einer mit Glasfasern verstärkten Keramik.

Die beiden Teile 120a, 120b sind mittels eines vorzugsweise geschlossenen Ringes 165 zueinander klemmbar. Der Ring 165 kann aus Metall oder auch aus einem temperaturbeständigen Kunststoff sein. Der Grundkörper 135 bildet an seinem dem Adaptereinsatz 120 zugewandten Ende einen Stutzen aus, auf dessen Innenseite eine Nut 138 eingebracht ist, in welche der Ring 165 einrasten kann.

In den Grundkörper ist vorzugsweise zentrisch ein durch den Adaptereinsatz 120 hindurchreichender Justierstift einsteckbar oder vorzugsweise einschraubbar, durch den die axiale Position des in die Werkzeugschrumpfaufnahme 1 einführbaren Werkzeuges exakt einstellbar ist.

Die der Werkzeugschrumpfaufnahme 1 zugewandte und diesen aufnehmende Senkung 122 erstreckt sich in axialer Richtung so weit, dass der Einspannabschnitt 9 der Werkzeugschrumpfaufnahme 1 im Wesentlichen überdeckt ist. Dadurch ist der Einspannabschnitt 9 beim Erwärmen abgedeckt und eine Veränderung der Oberfläche beispielsweise durch Oxidation damit vorteilhaft verhindert. Hierzu kann die Kegelform der Senkung 122 an die Kegelform der Werkzeugschrumpfaufnahme 1 so angepasst sein, dass es praktisch zu einem Luftabschluss kommt. Außerdem ist die Werkzeugschrumpfaufnahme 1 sicher in dem Adaptereinsatz 120 fixiert. Weiterhin kann durch den mehrteiligen Adaptereinsatz 120 die Werkzeugschrumpfaufnahme 1 nach dem Schrumpfen problemlos entnommen werden. Bei induktiver Erwärmung wird im elektrisch isolierenden Adaptereinsatz 120 kein Strom induziert und die Wärme entsteht trotz der Überdeckung des Adaptereinsatzes 120 in der Werkzeugschrumpfaufnahme 1.

## Patentansprüche

1. Werkzeugschrumpfaufnahme (101, 201) mit einem Aufnahmeabschnitt (103, 203) zum Einschrumpfen eines Werkzeugs (15) und einem Einspannbereich (263), der einen Einspannabschnitt (109, 209) zum Einspannen der Werkzeugschrumpfaufnahme (101, 201) in einem Werkzeugaufnahmeträger aufweist, wobei sich der Aufnahmeabschnitt (103, 203) für das Werkzeug (15) und der Einspannbereich (263) der Werkzeugschrumpfaufnahme (101, 201) in Längsrichtung überlappen, wobei die Werkzeugschrumpfaufnahme (101, 201) an ihrem dem Einspannabschnitt (109, 209) zugewandten Ende eine einen weiteren Abschnitt (107, 207) bildende und sich in Längsrichtung der Werkzeugschrumpfaufnahme (101, 201) erstreckende Öffnung aufweist, deren Durchmesser größer ist als der Durchmesser des Aufnahmeabschnitts (103, 203), **dadurch gekennzeichnet, dass** der weitere Abschnitt (107, 207) Schlitze (162a, 162b, 162c; 262a, 262c) mit einer axialen Erstreckung aufweist.

2. Werkzeugschrumpfaufnahme (101) nach Anspruch 1, **dadurch gekennzeichnet, dass** die Überlappung mehr als 30 % der Gesamtlänge der Werkzeugschrumpfaufnahme (101) beträgt, insbesondere mehr als 50 %.

3. Werkzeugschrumpfaufnahme (101, 201) nach einem der vorhergehenden Ansprüche, **dadurch gekennzeichnet, dass** der Aufnahmeabschnitt (103, 203) zum Einschrumpfen des Werkzeugs von einem Durchgangsloch gebildet wird, das sich über die gesamte Länge der Werkzeugschrumpfaufnahme (101, 201) erstreckt.

4. Werkzeugschrumpfaufnahme (101, 201) nach Anspruch 3, **dadurch gekennzeichnet, dass** das Durchgangsloch (103) an seinem dem Einspannabschnitt (109, 209) entgegengesetzten Ende einen Zentrierabschnitt (106) mit einem erweiterten Innendurchmesser aufweist.

5. Werkzeugschrumpfaufnahme (101, 201) nach einem der vorhergehenden Ansprüche, **dadurch gekennzeichnet, dass** im Anschluss an den Einspannabschnitt (109, 209) eine Umfangsnut (210) im Einspannbereich (263) ausgebildet ist, die einen insbesondere rechteckförmigen Querschnitt aufweist.

6. Werkzeugschrumpfaufnahme (101, 201) nach Anspruch 5, **dadurch gekennzeichnet, dass** an dem dem Einspannabschnitt (109, 209) entgegengesetzten Ende der Werkzeugschrumpfaufnahme (101, 201) im Anschluss an die Umfangsnut (210) ein kegelförmiger Abschnitt (212) im Einspannbereich (263) ausgebildet ist, der sich zur Umfangsnut (210) hin erweitert.

7. Werkzeugschrumpfaufnahme (101, 201) nach einem der vorhergehenden Ansprüche, **dadurch gekennzeichnet, dass** der Einspannabschnitt (109, 209) die Gestalt eines Kegels aufweist.

8. Werkzeugschrumpfaufnahme nach einem der Ansprüche 1 bis 6, **dadurch gekennzeichnet, dass** der Einspannabschnitt die Gestalt eines Kreiszylinders aufweist.

9. Werkzeugschrumpfaufnahme (101, 201) nach einem der Ansprüche 1 bis 8, **dadurch gekennzeichnet, dass** der Aufnahmeabschnitt (103, 203) von einer sich in Längsrichtung der Werkzeugschrumpfaufnahme (101, 201) erstreckenden Öffnung gebildet ist, vorzugsweise von einem sich über die ganze Länge erstreckenden Durchgangsloch, und dass sich das das Werkzeug aufnehmende Ende der Öffnung radial aufweitet, vorzugsweise einen Radius (161, 261) aufweist.

10. Werkzeugschrumpfaufnahme (201) nach einem der vorhergehenden Ansprüche, **dadurch gekennzeichnet, dass** der weitere Abschnitt (207) ein Innengewinde (264) aufweist.

11. System umfassend eine Werkzeugschrumpfaufnahme (101, 201) einem der vorstehenden Ansprüche und einen Adapter zum Aufsetzen dieser Werkzeugschrumpfaufnahme (101, 201), wobei der Adapter (20) eine Senkung (22) aufweist, deren Abmessungen an das Ende des Einspannabschnitts (109, 209) der Werkzeugschrumpfaufnahme (101, 201) angepasst sind.

12. System nach Anspruch 11, **dadurch gekennzeichnet, dass** sich der Adapter (20) zu der Werkzeugschrumpfaufnahme (101, 201) hin verjüngt.

13. System nach Anspruch 11 oder 12, **dadurch gekennzeichnet, dass** der Adapter mindestens zweiteilig ausgebildet ist und einen Grundadapter (35) und einen Adaptereinsatz (20) umfasst, an dem die Senkung (22) und/oder die Verjüngung (29, 31) ausgebildet sind/ist.

14. System nach Anspruch 13, **dadurch gekennzeichnet, dass** der Adaptereinsatz (120) zweiteilig ist, insbesondere aus zwei Gleichteilen (120a, 120b) zusammensetzbar ist.

15. System nach einem der Ansprüche 11 bis 14, **gekennzeichnet durch** eine zentrale Gewindebohrung (41), in der ein Gewindebolzen (50) verdrehbar aufgenommen ist, dessen freies Ende einen Anschlag für das Werkzeug bildet, wenn die Werkzeugschrumpfaufnahme (101, 201) auf den Adapter (20) aufgesetzt ist.

16. System nach einem der Ansprüche 11 bis 14, **dadurch gekennzeichnet, dass** die Senkung (122) sich in axialer Richtung so weit erstreckt, dass der Einspannabschnitt (109, 209) der Werkzeugschrumpfaufnahme (101, 201) überdeckt ist.

17. System nach einem der Ansprüche 11 bis 16, **dadurch gekennzeichnet, dass** der Adapter mindestens abschnittsweise aus einem elektrisch isolierenden Werkstoff besteht, insbesondere aus einem keramischen Werkstoff.

## Claims

1. A shrink-fit tool holder (101, 201) comprising a holding section (103, 203) for shrink-fitting a tool (15) and a clamping region (263) which has a clamping section (109, 209) for clamping the shrink-fit tool holder (101, 201) in a tool holder carrier, the holding section (103, 203) for the tool (15) and the clamping region (263) of the shrink-fit tool holder (101, 201) overlapping in the longitudinal direction, the shrink-fit tool holder (101, 201) having on its end facing the clamping section (109, 209) an opening forming a further section (107, 207) and extending in the longitudinal direction of the shrink-fit tool holder (101, 201), the diameter of which opening is larger than the diameter of the holding section (103, 203), **characterised in that** the further section (107, 207) has slots (162a, 162b, 162c; 262a, 262c) which extend axially.

2. The shrink-fit tool holder (101) according to Claim 1, **characterised in that** the overlapping is more than 30% of the total length of the shrink-fit tool holder (101), in particular more than 50%.

3. The shrink-fit tool holder (101, 201) according to any of the preceding claims, **characterised in that** the holding section (103, 203) for the shrink fitting of the tool is formed by a through hole which extends over the whole length of the shrink-fit tool holder (101, 201).

4. The shrink-fit tool holder (101, 201) according to Claim 3, **characterised in that** the through hole (103) has a centring section (106) with a widened inside diameter on its end opposite the clamping section (109, 209).

5. The shrink-fit tool holder (101, 201) according to any of the preceding claims, **characterised in that** following the clamping section (109, 209), a circumferential groove (210) is formed in the clamping region (263) which has in particular a rectangular cross-section.

6. The shrink-fit tool holder (101, 201) according to Claim 5, **characterised in that** on the end of the shrink-fit tool holder (101, 201), opposite the clamping section (109, 209), following the circumferential groove (210), a conical section (212) is formed in the clamping region (263) which widens towards the circumferential groove (210).

7. The shrink-fit tool holder (101, 201) according to any of the preceding claims, **characterised in that** the clamping section (109, 209) is in the form of a cone.

8. The shrink-fit tool holder according to any of Claims 1 to 6, **characterised in that** the clamping section is in the form of a circular cylinder.

9. The shrink-fit tool holder (101, 201) according to any of Claims 1 to 8, **characterised in that** the holding section (103, 203) is formed by an opening extending in the longitudinal direction of the shrink-fit tool holder (101), preferably by a through hole extending over the whole length, and that the end of the opening holding the tool widens radially, and preferably has a radius (161, 261).

10. The shrink-fit tool holder (201) according to any of the preceding claims, **characterised in that** the further section (207) has an internal thread (264).

11. A system comprising a shrink-fit tool holder (101, 201) according to any of the preceding claims and an adapter for the positioning of this shrink-fit tool holder (101, 201), the adapter (20) having a depression (22), the dimensions of which are matched to the end of the clamping section (109, 209) of the shrink-fit tool holder (101, 201).

12. The system according to Claim 11, **characterised in that** the adapter (20) tapers towards the shrink-fit tool holder (101, 201).

13. The system according to Claim 11 or 12, **characterised in that** the adapter is made in at least two parts and comprises a base adapter (35) and an adapter insert (20) on which the depression (22) and/or the taper (29, 31) is/are formed.

14. The system according to Claim 13, **characterised in that** the adapter insert (120) is in two parts, and in particular can be composed of two identical parts (120a, 120b).

15. The system according to any of Claims 11 to 14, **characterised by** a central threaded hole (41) in which a threaded bolt (50) is held such that it can turn and the free end of which forms a stop for the tool when the shrink-fit tool holder (101, 201) is positioned on the adapter (20).

16. The system according to any of Claims 11 to 14, **characterised in that** the depression (122) extends in the axial direction to such an extent that the clamping section (109, 209) of the shrink-fit tool holder (101, 201) is overlapped.

17. The system according to any of Claims 11 to 16, **characterised in that** the adapter is made at least in sections of an electrically insulating material, in particular of a ceramic material.

## Revendications

1. Porte-outil (101, 201) à ajustement fretté, comprenant un tronçon (103, 203) de réception pour le frettage d'un outil (15) et une région (263) d'ablocage, qui a un tronçon (109, 209) d'ablocage pour l'ablocage du porte-outil (101, 201) à ajustement fretté dans un support de porte-outil, le tronçon (103, 203) de réception de l'outil (15) et la région (263) d'ablocage du porte-outil (101, 201) à ajustement fretté se chevauchant dans la direction longitudinale, le porte-outil (101, 201) à ajustement fretté ayant, à son extrémité, tournée vers le tronçon (109, 209) d'ablocage, une ouverture, qui forme un autre tronçon (107, 207), qui s'étend dans la direction longitudinale du porte-outil (101, 201) à ajustement fretté et dont le diamètre est plus grand que le diamètre du tronçon (103, 203) de réception,
**caractérisé en ce que** l'autre tronçon (107, 207) a des fentes (162a, 162b, 162c; 262a, 262c) ayant une étendue axiale.

2. Porte-outil (101) à ajustement fretté suivant la revendication 1, **caractérisé en ce que** le chevauchement représente plus de 30% de la longueur totale du porte-outil (101) à ajustement fretté, notamment plus de 50%.

3. Porte-outil (101, 201) à ajustement fretté suivant l'une des revendications précédentes, **caractérisé en ce que** le tronçon (103, 203) de réception est formé pour le frettage de l'outil par un trou de passage, qui s'étend sur toute la longueur du porte-outil (101, 201) à ajustement fretté.

4. Porte-outil (101, 201) à ajustement fretté suivant la revendication 3, **caractérisé en ce que** le trou (103) de passage a, à son extrémité opposée au tronçon (109, 209) d'ablocage, un tronçon (106) de centrage de diamètre intérieur agrandi.

5. Porte-outil (101, 201) à ajustement fretté suivant l'une des revendications précédentes, **caractérisé en ce qu'**à la suite du tronçon (109, 209) d'ablocage, est constituée, dans la région (263) d'ablocage, une rainure (210) périphérique, qui a une section transversale, notamment rectangulaire.

6. Porte-outil (101, 201) à ajustement fretté suivant la revendication 5, **caractérisé en ce qu'**à l'extrémité, opposée au tronçon (109, 209) d'ablocage, du porte-outil (101, 201) à ajustement fretté, est constitué, dans la région (263) d'ablocage, un tronçon (212) conique, qui s'élargit vers la rainure (210) périphérique.

7. Porte-outil (101, 201) à ajustement fretté suivant l'une des revendications précédentes, **caractérisé en ce que** le tronçon (109, 209) d'ablocage a la forme d'un cône.

8. Porte-outil à ajustement fretté suivant l'une des revendication 1 à 6, **caractérisé en ce que** le tronçon d'ablocage a la forme d'un cylindre de section circulaire.

9. Porte-outil (101, 201) à ajustement fretté suivant l'une des revendications 1 à 8, **caractérisé en ce que** le tronçon (103, 203) de réception est formé d'une ouverture s'étendant dans la direction longitudinale du porte-outil (101, 201) à ajustement fretté, de préférence d'un trou de passage s'étendant sur toute la longueur et **en ce que** l'extrémité, recevant l'outil, de l'ouverture s'élargit radialement en ayant de préférence un rayon (161, 261).

10. Porte-outil (101, 201) à ajustement fretté suivant l'une des revendications précédentes, **caractérisé en ce que** l'autre tronçon (207) a un taraudage (264).

11. Système comprenant un porte-outil (101, 201) à ajustement fretté suivant l'une des revendications précédentes et un adaptateur pour mettre ce porte-outil (101, 201) à ajustement fretté, l'adaptateur (20) ayant un puits (22), dont les dimensions sont adaptées à l'extrémité du tronçon (109, 209) d'ablocage du porte-outil (101, 201) à ajustement fretté.

12. Système suivant la revendication 11, **caractérisé en ce que** l'adaptateur (20) se rétrécit vers le porte-outil (101, 201) à ajustement fretté.

13. Système suivant la revendication 11 ou 12, **caractérisé en ce que** l'adaptateur est constitué en au moins deux parties et comprend un adaptateur (35) de base et un insert (20) d'adaptateur, sur lequel le puits (22) et/ou le rétrécissement (29, 31) est/sont constitué(s).

14. Système suivant la revendication 13, **caractérisé en ce que** l'insert (120) d'adaptateur est en deux partie, en pouvant être composé notamment de deux parties (120a, 120b) égales.

15. Système suivant l'une des revendications 11 à 14, **caractérisé par** un trou (41) taraudé central, dans lequel peut être vissé un axe (50) fileté, dont l'extrémité libre forme une butée pour l'outil lorsque le porte-outil (101, 201) à ajustement fretté est mis sur l'adaptateur (20).

16. Système suivant l'une des revendications 11 à 14, **caractérisé en ce que** le puits (122) s'étend, dans la direction axiale, si loin que le tronçon (109, 209) d'ablocage du porte-outil (101, 201) à ajustement fretté est recouvert.

17. Système suivant l'une des revendications 11 à 16, **caractérisé en ce que** l'adaptateur est, au moins par tronçon, en un matériau isolant du point de vue électrique, notamment en un matériau céramique.
